# EUROPÄISCHE PATENTANMELDUNG

(11) **EP 1 388 441 A2**
(43) Veröffentlichungstag der Anmeldung: **11.02.2004**
(21) Anmeldenummer: 03018104.4
(22) Anmeldetag: 08.08.2003
(51) Int. Cl.: B60G 11/27, B60G 17/052

(54) **Pneumatische Höhenverstelleinrichtung für Kraftfahrzeuge**

(30) Priorität: 09.08.2002 DE 10236659; 09.08.2002 DE 10236661; 04.09.2002 DE 10241336
(71) Anmelder: Kerler, Johann, jun., 87745 Eppishausen/Aspach (DE)
(72) Erfinder: Kerler, Johann, jun., 87745 Eppishausen/Aspach (DE)
(74) Vertreter: Pfister, Stefan Helmut Ulrich

(57) **Zusammenfassung**

Die Erfindung betrifft eine pneumatische Höhenverstelleinrichtung für Kraftfahrzeuge, bestehend aus einem durch einen Luftanschluß beaufschlagbaren, bevorzugt zylinder- oder balgartigen Druckkörper, mit einer aus flexiblem Material gebildeten Außenwand, wobei sich der Druckkörper bei Druckbeaufschlagung längs einer bevorzugten Ausdehnungsrichtung auszudehnen vermag und der Druckkörper eine Stange, insbesondere eine Stange der Radführung oder des Schwingungsdämpfers zumindest teilweise umgibt.

## Beschreibung

Die Erfindung betrifft eine pneumatische Höhenverstelleinrichtung für Kraftfahrzeuge.

Federungssysteme bzw. geregelte Federungssysteme, welche auch zur Höhenverstellung von Kraftfahrzeugen geeignet sind, sind bekannt. Es handelt sich dabei um beispielsweise teiltragende Systeme, die bei weichem Aufbau mit Federn, zur Ergänzung des normalen Federsystems, eingesetzt werden. Um bei Beladung der Fahrzeuge die dort großen Federwege bzw. ein zu starkes Absinken des Fahrzeugaufbaus zu vermeiden, werden zusätzlich Luftfedern oder Kombinationen von hydropneumatischen Federn eingesetzt. Das meist konstante Gasvolumen wird dabei zur Federung des Fahrzeuges verwendet. Es ist auch bekannt, das zusätzliche Gasvolumen der Pneumatikfeder durch Vorsehung eines Luftanschlusses für die Veränderung der Höhenlage des Fahrzeuges zu verwenden. Die bisher bekannten Niveauregelungssysteme beschränken sich dabei auf Nutzkraftfahrzeuge, da der Platzbedarf für diese Niveauregelung recht hoch ist und in einem Personenkraftfahrzeug beispielsweise nicht einsetzbar ist.

Ein weiterer Nachteil der bekannten Luftniveauregelungen ist dadurch angegeben, daß die Gasvolumen durch zweischalige Ausbildung der Zylinder gekennzeichnet sind. So ist es beispielsweise bekannt, einen Teil des Zylinders mit metallischen Werkstoffen auszubilden und einen weiteren Teil auf diesen dann in Form einer Halbschale bewegbar anzuordnen. Dieser zweite bewegliche Teil wird dabei im wesentlichen aus gummiartigen Materialien hergestellt. Das Problem besteht zum einen in der erfoderlichen Abdichtung des Gasvolumens selbst durch die bewegliche Ausbildung des Gasvolumens. Zum weiteren besteht das Erfordernis der Abdichtung des Gasvolumens gegenüber dem in Kombination eingesetzten Hydraulikzylinder. Auch hier sind entsprechende Dichtungsmaßnahmen vorzusehen. Durch die stetige Auf- und Abbewegung und Beanspruchung des Materials wird insbesondere an der Verbindungsstelle des Gasvolumens zum hydraulischen Stoßdämpfer ein hoher Verschleiß auftreten, der zu Undichtigkeiten führt. Ein wie zuvor beschriebenes System ist bisher, wie bereits erwähnt, weder in Personenkraftwagen eingesetzt noch ist eine nachträgliche Ausrüstung eines Personengegenüber der Stange der Radführung oder der Stange des Schwingungsdämpfers abzudichten ist. Dies kann sehr einfach mittels entsprechender Abdichtungsmöglichkeiten, welche später noch ausführlicher beschrieben werden, gelöst werden. Durch die erfindungsgemäße Ausbildung ist der Platzbedarf für die pneumatische Höhenverstelleinrichtung in den Kraftfahrzeugen selbst wesentlich geringer als bei den aus dem Stand der Technik bekannten. Damit ist es nun möglich neue Kraftfahrzeuge mit einem derartigen pneumatischen Höhenverstellsystem auszurüsten. Es ist jedoch auch vorgesehen, eine Nachrüstung beispielsweise sehr tiefliegender Fahrzeuge für bestimmte Einsatzzwecke mit der pneumatischen Höhenverstelleinrichtung nach der Erfindung auszurüsten. Dabei sind in jedem Fall die am Fahrzeug vorhandenen Stoßdämpfer bei der erfindungsgemäßen Höhenverstelleinrichtung weiter verwendbar. Eine Adaption wird durch entsprechende Anschlußplatten erreicht. Da die Höhenverstelleinrichtung die Stange des Stoßdämpfers zumindest teilweise umschließt, ist der Platzbedarf sehr gering und kann am Fahrwerk so angeordnet werden, daß diese nicht stört. Die Erfindung erreicht durch einfache Maßnahmen eine effektive Höhenverstelleinrichtung. Dabei beschränkt sich die Erfindung nicht nur auf den Einsatz im Bereich eines Schwingungsdämpfers, sondern vermag auch andere Elemente oder Stangen, teilweise zu umschließen, wobei diese Teile bevorzugt der Radführung oder Federung dienen können. Die Anpassung erfolgt dann entsprechend dem konkreten Umstand. Die pneumatische Höhenverstelleinrichtung wirkt dabei mit einem Druckvorrat zusammen und besitzt günstigerweise eine entsprechende Steuerung, um das gewünschte Höhenmaß bzw. die Lage des Fahrzeuges auf der Fahrbahn zu erreichen.

Entsprechend einer Weiterbildung der Erfindung ist es vorgesehen, daß der Druckkörper in Ausdehnungsrichtung von Anschlußplatten verschließbar ist, wobei die Anschlußplatten je mindestens eine koaxiale Öffnung aufweisen, durch welche die kraftwagens mit einer derartigen Niveauregelung bekannt.

Es ist auch bekannt, eine hydropneumatische Niveauregelung vorzusehen, wobei ein zusätzlicher Behälter mit der Federung bzw. dem Schwingungsdämpfer verbunden ist und dieser zusätzliche Behälter zweiteilig ausgeführt ist, wobei das Volumen durch eine Gummimembran beispielweise in zwei unterschiedliche Volumina geteilt wird. Ein Teilvolumen ist dabei beispielsweise hydraulisch beaufschlagt und das zweite System ist als Gasvolumen ausgebildet. Es ist bekannt, das Gasvolumen dabei als zusätzliches Dämpfungsmittel zu benutzen. Eine Niveauregelung ist bei diesen Systemen über den pneumatischen Weg überhaupt nicht bzw. nur in äußerst geringem Umfang möglich, indem beispielsweise das Gasvolumen mit Druck beaufschlagbar ausgebildet wird. Es wird aber zur Niveauregelung gegebenenfalls lediglich das Hydraulikvolumen durch zusätzliche Beaufschlagung mit Volumen für eine Niveauregelung verwendet werden können.

Ausgehend von dem zuvor beschriebenen Stand der Technik ist es Aufgabe der Erfindung, eine pneumatische Höhenverstelleinrichtung für Kraftfahrzeuge zur Verfügung zu stellen, die die aus dem Stand der Technik bekannten Probleme beseitigt.

Die Erfindung geht dazu von dem zuvor beschriebenen Stand der Technik aus und schlägt eine pneumatische Höhenverstelleinrichtung für Kraftfahrzeuge vor, bestehend aus einem durch einen Luftanschluß mit Druck beaufschlagbarem, bevorzugt zylinderoder balgartigem Druckkörper mit einer aus flexiblem Material gebildeten Außenwand, wobei sich der Druckkörper bei Druckbeaufschlagung längs einer bevorzugten Ausdehnungsrichtung auszudehnen vermag und der Druckkörper eine Stange, insbesondere eine Stange der Radführung oder des Schwingungsdämpfers zumindest teilweise umgibt. Durch den erfindungsgemäßen Vorschlag ist es nunmehr möglich, den pneumatischen Druckkörper aus einem ein- oder mehrteiligen Druckkörper zu erhalten, der lediglich Stange und/oder Teile eines Schwingungsdämpfers führbar ist/sind. Mittels der Anschlußplatten ist es möglich, einen Druckkörper, welcher einwandig ausgebildet ist, beidseitig mit den Anschlußplatten zu verschließen, wobei es leicht möglich ist, in den Anschlußplatten bzw. in deren Öffnungen Dichtungen vorzusehen, mittels derer der Druckkörper gegenüber der Stange der Radführung bzw. der Stange des Schwingungsdämpfers oder aber dem Außengehäuse des Schwingungsdämpfers abgedichtet werden kann.

Die Anschlußplatten sind entsprechend einer Weiterbildung der Erfindung druckdicht mit der Außenwand verbindbar und die Öffnungen sind dabei gegen die Stange des Schwingungsdämpfers bzw. die Stange der Radführung und gegenüber gegebenenfalls dem Außengehäuse eines Schwingungsdämpfers abdichtbar.

Bevorzugt ist es nach der Erfindung, wenn der Druckkörper aus homogenem Material, zumindest aber die Außenwand des Druckkörpers derartig ausgebildet ist. Insbesondere eine einteilige Ausführung ist vorgesehen, die gegenüber den bekannten Lösungen einfacher in der Herstellung und problemloser abzudichten ist.

Der Druckkörper weist an seinem in Ausdehnungsrichtung gesehenen Ende einen Befestigungsring auf, der am Dichtkörperrand etwas über die Befestigungsringebene vorsteht, wodurch der Befestigungsring mit der bzw. den Anschlußplatten dicht verbindbar ist. Insbesondere ist es vorgesehen, die Anschlußplatten mit dem Befestigungsring zu verschrauben. Durch diese Art der Ausbildung wirkt der Druckkörperrand gleichzeitig als Dichtung, die den Druckkörper abdichtet.

Es ist auch günstig, wenn zumindest die Außenwand des Druckkörpers einen Wulst aufweist, der über die Befestigungsringebene vorsteht und den Spalt zwischen Befestigungsring und Anschlußplatte abdichtet. Diese Ausführungsform ist derart ausgeführt, daß der Befestigungsring in Art eines losen Flansches wirkt und dann durch Verbindung mit den Anschlußplatten die Dichtung bildet. Die Anschlußplatte wird dabei vorzugsweise mit dem Dichtungsring verschraubt, wobei es möglich ist, zwischen den Dichtungsflächen Dichtungsmittel anzubringen, die dann die beiden Bauelemente dicht miteinander verbinden bzw. verkleben.

Entsprechend einer vorteilhaften Weiterbildung ist es vorgesehen, daß in der Öffnung der Anschlußplatten Dichtungen vorgesehen sind. Dies können beispielsweise in Nuten angeordnete Dichtungsringe, zum Beispiel O-Ringe, sein, wobei vorzugsweise wenigstens zwei derartige O-Ringe in Dichtungsrichtung übereinander angeordnet werden sollten.

Günstig ist es auch, wenn die Stange der Radführung oder die Stange des Schwingungsdämpfers oder der Außenzylinder des Schwingungsdämfers in einer der Anschlußplatten fest dichtend eingefügt sind. Dies ist zum Beispiel durch Schweißen, Kleben, Hartlöten oder dergleichen, vorgesehen. Dadurch wird zumindest an der fest eingefügten Verbindung eine absolut sichere und wartungsfreie Abdichtung erreicht.

Die Erfindung betrifft auch eine pneumatische Höhenverstelleinrichtung wie zuvor beschrieben, die sich dadurch auszeichnet, daß der Druckkörper doppelwandig ausgebildet ist und eine Innenwandung und eine Außenwandung aufweist, welche insbesondere flexibel ausgebildet sind. Durch die flexible Ausbildung der Außen- und Innenwand ist es gegeben, daß sich der Druckkörper bei Druckbeaufschlagung ausdehnt und bei Senkung des Druckes wieder zusammenzieht. Damit läßt sich auch nach dieser Ausführungsform eine Höhenverstellung pneumatisch erreichen. Der Vorteil dieser Ausbildung ist, daß gegenüber der Stange des Schwingungsdämpfers bzw. der Stange der Radführung eine zusätzliche Abdichtung nicht erforderlich ist, da dieser Druckkörper in sich selbst bereits abdichtend ausgebildet ist.

Eine Weiterbildung der Erfindung zeichnet sich dadurch aus, daß Innenwand und Außenwand des Druckkörpers über eine Anschlußplatte geführt sind und ein Preßring die beiden Wandungen auf den Anschlußplatten dicht hält oder die Innenwand oder die Außenwand dicht mit der Anschlußplatte verklebt, verbunden, verschraubt, aufvulkanisiert oder andersartig abdichtend verbunden ist.

Dies führt wie bereits erwähnt dazu, daß die Anschlußplatten gegenüber der Stange der Radführung bzw. des Schwingungsdämpfers oder dem äußeren Körper des Schwingungsdämpfers nicht mehr abgedichtet werden müssen. Der Wartungsaufwand einer derartigen Höhenverstelleinrichtung wird dadurch reduziert und die Fehlerquote bei einer Montage beispielsweise durch unsachgemäß eingelegte Dichtungen oder ähnliches vermieden.

Erfindungsgemäß ist es auch vorgesehen, daß zur Führung des Gehäuses des Schwingungsdämpfers oder zur Führung der Stange des Schwingungsdämpfers oder der Radführung eine Führungshülse im Inneren des Druckkörpers vorgesehen ist. Damit wird ein Abweichen von der Achse der Höhenverstelleinrichtung vermieden und eine exakte Führung erreicht, so daß beispielsweise ein Schleifen an den Rädern oder am Gehäuse nicht mehr vorkommen kann.

Ein weiterer Aspekt der Erfindung ist dadurch angegeben, daß die flexible Außenwand des Druckkörpers in den oberen und unteren Anschlußplatten formschlüssig dichtend eingepaßt ist. Damit wird weiterer Herstellungsaufwand vermieden. Insbesondere ist diese vorteilhafte Weiterbildung dazu geeignet, den Wartungsaufwand weiter zu verringern, da die Dichtflächen selbst durch die formschlüssige Verbindung der Anschlußplatten an den Druckkörper im normalen Gebrauch kaum undicht werden können.

Bevorzugt ist es auch, wenn die Anschlußplatte aus dem gleichen Material wie der Druckkörper, zum Beispiel aus Gummi, EPDM oder Moosgummi oder beispielsweise aus Metall, bevorzugt Leichtmetall wie Aluminium, besteht.

Die Erfindung zeichnet sich auch dadurch aus, daß die Öffnungen der beiden Anschlußplatten einen gleichen oder einen unterschiedlichen Durchmesser besitzen. Dies richtet sich jeweils nach dem Einsatzzweck, für den die pneumatische Höhenverstelleinrichtung eingesetzt werden soll. Der eine Durchmesser wird dabei bevorzugt für die Aufnahme der Stange eingesetzt. Ein größerer Durchmesser wird bevorzugt dann eingesetzt, wenn das Gehäuse des Schwingungsdämpfers in der Anschlußplatte angeordnet wird.

Erfindungsgemäß ist es auch vorgesehen, daß der Luftanschluß der pneumatischen Höhenverstelleinrichtung mit einer am Fahrzeug vorhandenen und/oder einer externen Druckerzeugungsanlage verbindbar ist und/oder der Luftanschluß in der Außenwand oder in der Anschlußplatte des Druckkörpers angeordnet ist. Somit kann man kombinieren, wenn beispielsweise eine Höhenverstellung des Fahrzeuges erforderlich ist, daß man eine vorhandene Druckluftanlage am Fahrzeug zur Höhenverstellung nutzt, indem aus dieser vorhandenen Anlage der Druckkörper mit Druck beaufschlagt und dadurch der Körper gestreckt wird. Es ist in gleicher Weise selbstverständlich möglich, eine externe Druckerzeugungsanlage, beispielsweise einen Kompressor, zu nutzen, um den Druckkörper mit Druck zu beaufschlagen. Nach Erreichen der gewünschten Höhenverstellung muß dann der Anschluß zum Kompressor gelöst werden, wobei dazu an dem Druckkörper beispielsweise ein Ventil vorzusehen ist, um den Druck in dem Druckkörper zu halten. Diese Variante ist zwar etwas aufwendiger, aber durchaus denkbar, wenn beispielsweise Personenkraftwagen nicht mit einer Druckerzeugungsanlage ausgestattet sind, so daß man diese Fahrzeuge aber auch durch den Anschluß einer externen Druckerzeugungsanlage in ihrer Höhenlage verändern kann.

Es ist weiterhin von Vorteil, wie zuvor bereits erwähnt, wenn Einlaß- bzw. Auslaßventile, insbesondere druckbegrenzende Ventile, am Luftanschluß vorgesehen sind. Damit läßt sich eine Fixierung in einer bestimmten Lage sehr leicht realisieren.

Es ist weiterhin vorgesehen, daß die Luftanschlußöffnung in das Innere des durch die flexible Innenwand und Außenwand gebildeten Druckkörpers weist. Dies ist selbstverständlich bei einer Ausführung mit einem einwandigen Druckkörper so zu verstehen, daß die Luftanschlußöffnung dann über, eine der Anschlußplatten in das Innere des Druckkörpers geführt wird.

Ein weiterer Aspekt der erfindungsgemäßen pneumatischen Höhenverstelleinrichtung ist dadurch angegeben, daß der Druckkörper vorzugsweise in Ausdehnungsrichtung mittig mit einem Einschnitt versehen ist.

Dabei ist es von besonderem Vorteil, wenn der Druckkörper als ringartiger Balg ausgebildet ist. Durch diese balgförmige Ausbildung bzw. durch die Ausbildung mit dem Einschnitt ist eine Erweiterung des Höhenverstellweges durchaus möglich, indem dieser Bereich, beispielsweise bei Beaufschlagung mit Druck, gestreckt wird. Selbstverständlich ist es erfindungsgemäß auch vorgesehen, mehrere derartige balgförmige Einschnitte an dem Druckkörper vorzusehen, so daß ein noch größerer Verstellweg erreicht werden kann.

Eine vorteilhafte Weiterbildung der Erfindung zeichnet sich dadurch aus, daß zumindest die Außenwand des Druckkörpers aus Gummi, vorzugsweise faserverstärktem Gummi, flexiblem Kunststoffmaterial, verstärkter Leinwand bzw. dehnbarem Verbundmaterial gebildet ist. Der Einsatz derartiger Materialien bietet sich gerade für eine Höhenverstelleinrichtung aufgrund der Materialeigenschaften der zuvor erwähnten Materialien an.

Es hat sich als günstig erwiesen, wenn die Stange in den Anschlußplatten außermittig gelagert ist. Die Stange des Schwingungsdämpfers bzw. der Radführung ist relativ nah am Rad des Fahrzeuges geführt. Dies könnte dazu führen, daß der Druckkörper bei entsprechender Druckbeaufschlagung mit geringerem Drücken bei zentraler Anordnung der Führung derart geführt ist, daß er mit dem Rad schleifend in Kontakt kommen würde. Durch die Anordnung der Stangen in den Anschlußplatten außerhalb des Zentrums läßt sich der Druckkörper so verdrehen, daß er von dem Rad wegweist, so daß selbst bei der größten Ausdehnung des Druckkörpers dieser nicht mit dem Rad in Kontakt gelangen kann.

Von besonderem Vorteil ist es entsprechend einer Weiterbildung der Erfindung, wenn der Schwingungsdämpferkörper und/oder die Schwingungsdämpferstange in dem Druckkörper selbst angeordnet ist. Dies kann zu einer weiteren Platzersparnis der gesamten pneumatischen Höhenverstelleinrichtung genutzt werden.

Von Vorteil ist es dabei weiterhin, wenn der Schwingungsdämpfer und der Druckkörper als bauliche Einheit ausgebildet sind. Dadurch ist ein Auswechseln bzw. Nachrüsten an einem Fahrzeug leicht möglich. Insbesondere ist es jetzt möglich, normal vorhandene Schwingungsdämpfer durch eine erfindungsgemäße pneumatische Höhenverstelleinrichtung auszutauschen, um eine Höhenverstellung zu ermöglichen, wenn dies erforderlich ist.

Auch das Vorhalten sogenannter Nachrüst-Kids und deren bestimmungsgemäßer Einsatz sind jetzt möglich.

Ein weiterer Aspekt der Erfindung ist dadurch angegeben, daß das Gehäuse des Schwingungsdämpfers ein Außengewinde aufweist, welches in ein an der Anschlußplatte vorgesehenes Innengewinde einschraubbar ist, derart, daß eine Einstellung der Lage des Rades am Fahrzeug möglich ist. Dies geschieht beispielsweise durch Verdrehen der Anschlußplatte auf dem Gehäuse des Schwingungsdämpfers. Es ist dabei lediglich darauf zu achten, daß der Druckkörper durch die außermittige Anordnung beim Verdrehen nicht durch die außermittige Anordnung beim Verdrehen nicht in die nächstliegende Lage bezüglich des Rades kommt, sondern in einer entfernten Lage dann wieder fixiert wird. Dazu sind erfindungsgemäß auch entsprechende Fixiereinrichtungen vorgesehen, die in Form von Klemmschrauben, Bolzen, selbsthemmendem Gewinde oder dergleichen, angegeben sind.

Es wurde weiter gefunden, daß es von Vorteil ist, wenn die Ausdehnungsrichtung parallel oder im Wesentlichen parallel mit der Orientierung der Stangenachse, insbesondere der Schwingungsdämpferachse, ist.

Von besonderem Vorteil ist es weiterhin, daß eine an der Radaufhängung und/oder der Radschwinge des Fahrzeuges befestigbare Grundplatte vorgesehen ist, die mit der Anschlußplatte des Druckkörpers verbindbar ist. Rüstet man die Fahrzeuge mit jeweils fahrzeugspezifischen Grundplatten aus, ist es nunmehr sehr leicht gegeben, einen vorhandenen Schwingungsdämfer durch eine pneumatische Höhenverstelleinrichtung auszuwechseln. Auch ein Wechsel im Reparaturfall ist sehr leicht möglich, da durch die Ausführung der Anschlußplatte, welche korrespondierend zur Grundplatte des Druckkörpers ausgeführt ist, ein derartiger leichter Wechsel vorzunehmen ist.

Ein weiterer Aspekt der Erfindung ist dadurch angegeben, daß an der zum Druckkörper weisenden Seite der Anschlußplatte Dichtflächen vorgesehen sind, die mit dem Druckkörper bzw. dessen Außenrand abdichtend zusammenwirken. Diese zusätzlichen Dichtflächen sind beispielsweise in Form von Abschrägungen angegeben, die dann durch Zusammenwirken mit dem Druckkörper bzw. dessen Außenwand diesen zusätzlich auch abdichten. Die Abdichtung mit der Andruckfläche wurde zuvor bereits beschrieben. Beide Varianten sind natürlich auch unabhängig voneinander in unterschiedlichen Varianten nach der Erfindung realisierbar.

Die Erfindung zeichnet sich auch dadurch aus, daß die obere oder die untere Anschlußplatte eine deckungsgleiche Ausführung aufweisen und je einen zum Inneren des Druckkörpers gerichteten Führungsring besitzen. Dieser Führungsring dient dazu, um beispielsweise die Innen- und/oder Außenwand des Druckkörpers gegenüber der Anschlußplatte zum einen zu befestigen und zum zweiten dort abzudichten.

Erfindungsgemäß wurde gefunden, daß es von Vorteil ist, wenn ein Aufsatzzylinder vorgesehen ist, der über den Schwingungsdämpfer des Fahrzeuges schiebbar bzw. steckbar ist. Dadurch ist es jetzt angegeben, daß die zusätzliche Höhenverstelleinrichtung auf einen herkömmlichen Schwingungsdämpfer einfach aufsetzbar bzw. aufschiebbar ist. Dies ermöglicht in sehr einfacher Weise eine pneumatische Höhenverstelleinrichtung nachträglich in ein Kraftfahrzeug einzubauen, ohne dabei die möglicherweise noch in Ordnung befindlichen Schwingungsdämpfer, egal ob hydraulisch oder mechanisch-hydraulisch, auswechseln zu müssen.

Erfindungsgemäß ist es weiterhin von Vorteil, wenn der Aufsatzzylinder eine Verstelleinrichtung zur zusätzlichen Höhen- bzw. Niveauveränderung aufweist. Dies können unterschiedliche Verstelleinrichtungen sein, beispielsweise ist es möglich, an dem Aufsatzzylinder Höhenverstelleinrichtungen in Form von einstellbaren Stufen vorzusehen. Beispielsweise ist dies durch die Anordnung einer verstellbaren Auflage im Aufsatzzylinder durchaus angegeben. Es ist jedoch auch möglich, an dem Aufsatzzylinder Klemmen, Federringe oder dergleichen, vorzusehen, die in dem Zylinder fixierbar angeordnet sind.

Entsprechend einer vorteilhaften Weiterbildung ist es weiterhin vorgesehen, daß die Verstelleinrichtung durch ein Innengewinde im Aufsatzzylinder und ein Außengewinde auf dem Schwingungsdämpfer angegeben ist. Dadurch läßt sich in sehr einfacher Weise der Aufsatzzylinder auf den Schwingungsdämpfer aufschrauben, wodurch erstens eine sehr günstige Befestigungsmöglichkeit angegeben ist und zweitens eine weitere Höhenverstelleinrichtung durch das Gewinde selbst.

Die Erfindung betrifft auch ein Fahrzeug mit einer Radaufhängung, auf welcher ein Schwingungsdämpfer angeordnet ist, sowie mit einer pneumatischen Höhenverstelleinrichtung nach einem oder mehreren der zuvor beschriebenen Ausführungsformen, wobei zumindest eine Stange des Schwingungsdämpfers zumindest teilweise von dem Druckkörper umgeben ist.

Die Erfindung wird nachfolgend anhand von Ausführungsbeispielen und Zeichnungen weiter beschrieben.

Es zeigen:
- Fig. 1a:: Schnitt durch eine Ausführung der pneumatischen Höhenverstelleinrichtung nach der Erfindung,
- Fig. 1b:: Schnittdetail der Außenwand des erfindungsgemäßen Druckkörpers in gestreckter Stellung,
- Fig. 1c:: untere Aufnahmeplatte nach der Erfindung als Draufsicht,
- Fig. 2:: Schnittdarstellung einer weiteren Ausführungsform der Erfindung,
- Fig. 3:: weitere Variante einer pneumatischen Höhenverstelleinrichtung nach der Erfindung,
- Fig. 4:: weitere Ausführungsform der erfindungsgemäßen, pneumatischen Höhenverstelleinrichtung,
- Fig. 5a und 5b:: Schnittdetail einer Ausführungsform der Erfindung der pneumatischen Höhenverstelleinrichtung.

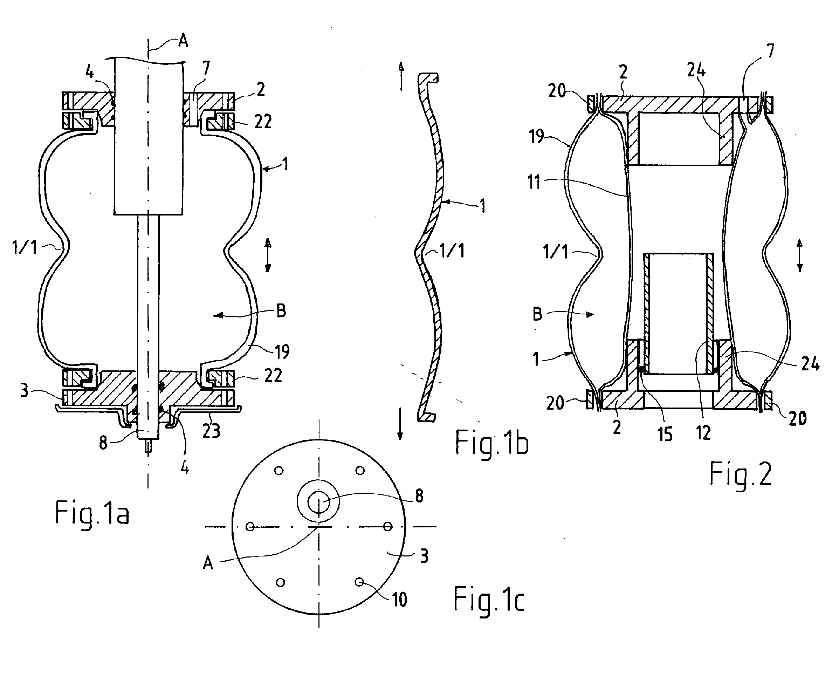

Die Fig. 1a zeigt eine Schnittdarstellung durch eine der vielfältigen Ausführungsformen einer pneumatischen Höhenverstelleinrichtung nach der Erfindung. Mit dem Bezugszeichen 1 ist dabei der Druckkörper bezeichnet, welcher zwischen einer oberen Aufnahmeplatte und einer unteren Aufnahmeplatte angeordnet ist. Der Druckkörper weist einen Einschnitt 1/1 auf, der den gesamten Körper balgartig ausbildet, derart, daß, wie mit den Pfeilen auf der rechten Seite der Schnittdarstellung angedeutet, eine streckende Bewegung bei Druckbeaufschlagung ermöglicht ist. Wieweit sich der Balg bzw. Druckkörper strecken läßt, hängt von der Ausführung des Einschnitts 1/1 ab. In der Fig. 1b ist angezeigt, daß sich der Druckkörper 1 bzw. dessen Außenwand in einer gestreckten Stellung befindet. Mit den Pfeilen wird dort angedeutet, daß eine weitere Streckung durchaus noch möglich ist.

Das Bezugszeichen A bezeichnet die Achse für die Stange 8 der Radführung bzw. die Stange des Schwingungsdämpfers. Die Stange 8 ist dabei im oberen Bereich erweitert, so daß sie im Wesentlichen der Form eines Schwingungsdämpfers entspricht und indem dort entsprechende Befestigungsmöglichkeiten, welche hier nicht dargestellt sind, vorgesehen werden, an die sich die Höhenverstelleinrichtung in leichter Weise, anstelle von hydraulisch-mechanischen Schwingungsdämpfern, beispielsweise einsetzen läßt. Die obere Anschlußplatte 2 und die untere Anschlußplatte 3 ist mittels je eines Befestigungsringes 22 verbunden. Dadurch wird der Druckkörper 1 in Art eines losen Flansches mit den Anschlußplatten 2,3 jeweils verbunden. Dies geschieht vorzugsweise durch Verschrauben des Befestigungsrings 22 mit den Anschlußplatten 2 und 3. In der oberen Anschlußplatte 2 ist ein Luftanschluß 7 vorgesehen, über den das Innere B des Druckkörpers 1 mit Druck beaufschlagbar ist. Zur Abdichtung der Stange 8 sind im oberen Bereich mit dem Bezugszeichen 4 bezeichnete Dichtungsringe vorgesehen, die die Stange nach oben abdichten. In gleicher Weise sind diese Dichtungen 4 auch in der unteren Anschlußplatte 3 vorzusehen. Dies ist dort ebenfalls nur schematisch angedeutet.

Die gesamte pneumatische Höhenverstelleinrichtung gemäß der Fig. 1a ist mit der unteren Anschlußplatte 3 auf einer Grundplatte 23 angeordnet, welche vorteilhafterweise an dem Fahrzeug bzw. an der Radführung oder an der Radschwinge vorzusehen ist. Auf diese Grundplatte 23, welche fahrzeugspezifisch unterschiedlich ausgeführt sein kann, wird dann die gesamte pneumatische Höhenverstelleinrichtung einfach aufgesetzt. Selbstverständlich ist es entsprechend einer Weiterbildung der Erfindung auch vorgesehen, hier Fixierungsmöglichkeiten vorzusehen, mittels derer die pneumatische Höhenverstelleinrichtung dann auf der Grundplatte 23 befestigt bzw. fixierbar ist. Dies ist in der Zeichnung nicht dargestellt, ist aber in verschiedensten Varianten möglich. Beispielsweise können Fixierungsstifte oder Fixierungsschrauben vorgesehen sein, mittels derer dann die Anschlußplatte 3 mit der Grundplatte 23 lösbar fest verbindbar ist.

Die Fig. 1c zeigt die untere Anschlußplatte (3) als Draufsicht. Mit dem Bezugszeichen A ist dabei wiederum die Achse für die Stange 8 bezeichnet. Die Stange 8 ist außermittig in der hier nicht bezeichneten Öffnung der Anschlußplatte angordnet. Mit dem Bezugszeichen 10 sind die Bohrungen bezeichnet, durch welche mittels Schrauben die Anschlußplatte 3 mit dem Befestigungsring 22 verschraubt werden. In der Fig. 1a ist angedeutet, daß die Außenwand 19 des Druckkörpers 1 winkelförmig an den Anschlußstellen für den Befestigungsring abgewinkelt sind. Dies kann auch beispielsweise durch eine wulstartige Ausbildung erfolgen. Insgesamt ist jedoch zu sehen, daß die Außenwand 19 des Druckkörpers 1 etwas über das Niveau des Befestigungsringes hervorsteht. Damit bildet diese überstehende Fläche der Außenwand 19 gleichzeitig die Dichtung, mittels derer der Druckkörper 1 nach außen hin abgedichtet wird. In gleicher Weise ist diese Abdichtung auch an der oberen Anschlußplatte 2 vorgesehen. Bei Beaufschlagung des Inneren B des Druckkörpers 1 wird sich dieser durch den erhöhten Druck strecken, so daß sich die Einschnitte 1/1 nach außen bewegen und dadurch eine Längenausdehnung erreicht wird. Für tiefer gelegte Personenkraftwagen ist dies beispielsweise eine Möglichkeit, das Fahrzeug für Reparaturzwecke bzw. für das Fahren über Hindernisse, beispielsweise in eine tiefer gelegene Garage, entsprechend anzuheben. Für den eigentlichen Fahrbetrieb ist die pneumatische Höhenverstelleinrichtung zumindest in ihrer einfachsten Form nicht vorgesehen.

Es ist selbstverständlich auch möglich, mehrere Einschnitte 1/1 am Umfang des Druckkörpers vorzusehen, so daß eine ziehharmonikaartigee Form entsteht. Auch diese Form läßt sich dann leicht durch Druckbeaufschlagung strecken bzw. durch Druckminderung wieder zusammenziehen. Hierdurch läßt sich ebenfalls die Höhe bzw. der Weg der Verstellung verlängern.

Die Fig. 2 zeigt eine weitere Ausführungsform nach der Erfindung, die sich dadurch auszeichnet, daß der Druckkörper 1 von einer Innenwand 11 und einer Außenwand 19 gebildet wird, welche von einer Anschlußplatte 2 jeweils oben und unten gehalten wird. Ein Preßring 20 preßt sowohl die Innenwand als auch die Außenwand des Druckkörpers 1 an die Anschlußplatte 2, so daß dort der Druckkörper 1 in sich dicht ist. Damit werden die nach der Ausführungsform der Fig. 1a notwendigen Abdichtungen in den oberen bzw. unteren Anschlußplatten 2 und 3 nicht mehr notwendig, da der Druckkörper 1 bereits durch die doppelwandige Ausbildung in sich geschlossen ist. Die Abdichtung kann selbstverständlich noch dadurch verbessert werden, daß die Anschlußstellen bzw. die Verbindungsstellen der Außenund Innenwand jeweils verklebt bzw. vulkanisiert werden, bevor sie mit dem Preßring 20 dann an die Anschlußplatte 2 gepreßt werden. Es ist selbstverständlich auch möglich, den Preßring 20 schmaler auszubilden, als dies in der Darstellung angedeutet ist. Es ist also nicht erforderlich, den Preßring in der gleichen Breite auszubilden, die beispielsweise durch die Dicke der Anschlußplatte 2 angegeben ist.

In dem Inneren B des Druckkörpers 1 bzw. zwischen den Innenwänden ist eine Führungshülse 12 vorgesehen, durch die beispielsweise die Stange 8 oder aber ein Schwingungsdämpfer herkömmlicher Bauart geführt werden kann. Der Lufteinlaß 7 ist in der oberen Anschlußplatte 2 dargestellt. Er führt ins Innere B des Druckkörpers 1, so daß auch hier durch die Druckbeaufschlagung eine Streckung des Druckkörpers 1 bewirkt wird. Beim Reduzieren des Druckes wird dann ein Zusammenziehen durch die federnden Materialeigenschaften des Materials für den Druckkörper 1 herbeigeführt. Mit dem Bezugszeichen 24 ist ein Führungsring bezeichnet, welcher die innere Wand führt und zwischen der beispielsweise im unteren Abschnitt eine Verbindung 15 durch Vulkanisieren, Kleben oder durch einen Preßring oder dergleichen, vorgesehen ist.

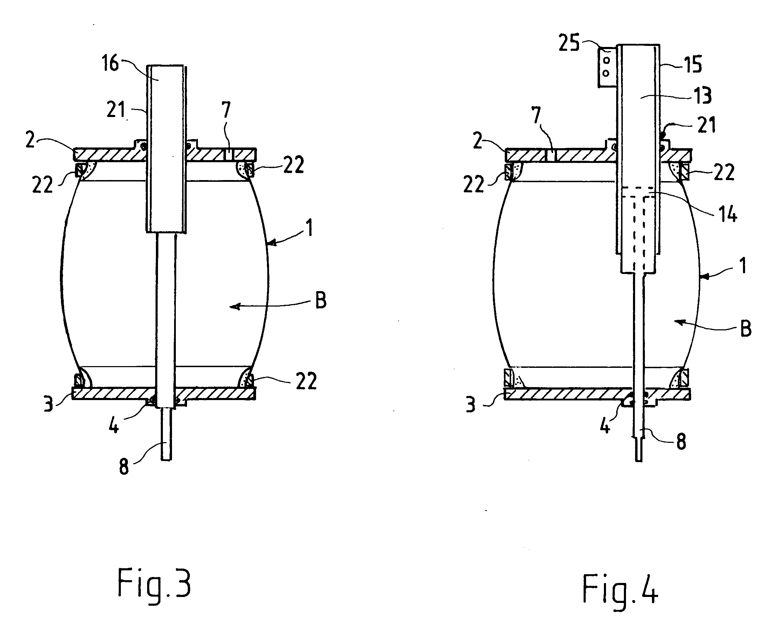

Die Fig. 3 zeigt eine weitere Variante einer pneumatischen Höhenverstelleinrichtung nach der Erfindung. Bisher verwendete Bezugszeichen werden dabei in gleicher Weise verwendet. Die Ausführungsform gemäß der Fig. 3 unterscheidet sich von den bisher beschriebenen dadurch, daß der Druckkörper 1 eine nach außen gerichtete Krümmung aufweist, die im absolut gestreckten Zustand fast gerade ist und im zusammengezogenen Zustand wesentlich mehr gekrümmt ist, als in der Darstellung zu sehen ist. Mit dem Bezugszeichen 16 ist ein Aufsatzzylinder bezeichnet, der beispielsweise auf einen Schwingungsdämpfer, welcher in der Fig. 3 nicht dargestellt ist, aufsetzbar bzw. aufschraubbar ist. Die aufschraubbare Variante ist dabei bevorzugt, weil dadurch gleichzeitig eine weitere Höhenverstellmöglichkeit angegeben ist. Dazu ist es lediglich vorzusehen, daß auf dem Schwingungsdämpfer bzw. auf dessen äußerer Hülse ein Außengewinde passend zu dem Innengewinde 21 besteht. Dadurch ist es möglich, die pneumatische Höhenverstelleinrichtung auf einem vorhandenen Schwingungsdämpfer aufzuschrauben. Durch eine koaxiale Anordnung der Öffnungen in den Anschlußplatten 2 und 3 ist die bereits beschriebene Möglichkeit angegeben, den Druckkörper 1 in ausreichendem Abstand von den Rädern zu positionieren, um ein Schleifen des Druckkörpers an den Rädern zu vermeiden.

Die Fig. 4 zeigt eine weitere Ausführungsform der Erfindung, wobei hier ein Schwingungsdämpfer 13 zumindest teilweise in dem Inneren B des Druckkörpers 1 angeordnet ist. Mit dem Bezugszeichen 14 ist schematisch der Kolben des Schwingungsdämpfers angedeutet. Die Stange 8 ist hierbei die Kolbenstange des Schwingungsdämpfers selbst. Die untere Anschlußplatte 3 ist wiederum durch Dichtungen 4 gegenüber der Stange 8 abgedichtet. Die obere Anschlußplatte 2 weist in dieser Ausführungsform sowohl den Luftanschluß 7 als auch ein Innengewinde 21, auf welches mit dem Pfeil nur angedeutet ist, auf. In das Innengewinde 21 wird der Zylinder des Schwingungsdämpfers 13 mittels des Außengewindes 15 eingedreht. Dabei ist auch hier eine Höhenverstellung angegeben. Schematisch angedeutet ist auch hier eine Abdichtung des Schwingungsdämpfers 13 an der Anschlußplatte 2. Die Funktion der pneumatischen Höhenverstellung erfolgt wie bei den zuvor beschriebenen Ausführungsformen ebenfalls mittels Druckbeaufschlagung, wodurch sich der Druckkörper 1 streckt, bzw. durch Reduzierung des Druckes, wodurch sich der Druckkörper 1 dann wieder krümmt. Mit dem Bezugszeichen 25 ist eine Befestigungsmöglichkeit des Schwingungsdämpfers an dem Fahrzeug bzw. an der Radaufhängung vorgesehen, wodurch auch diese Ausführungsform in einfacher Weise an einem serienmäßigen Fahrzeug befestigt werden kann, wenn diese Befestigungsmöglichkeit 25 entsprechend angepaßt ist.

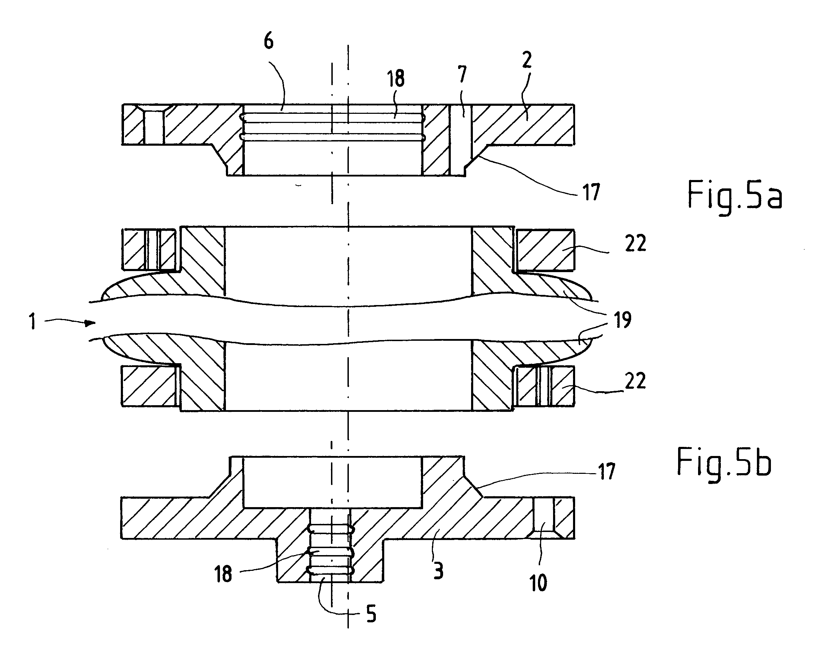

Die Fig. 5a und 5b zeigen Schnittdetails einer Ausführungsform der pneumatischen Höhenverstelleinrichtung nach der Erfindung. Die bisher verwendeten Bezugszeichen werden dabei in gleicher Weise verwendet. Mit dem Bezugszeichen 2 ist dabei die obere Anschlußplatte bezeichnet. Mit dem Bezugszeichen 22 ist ein Befestigungsring bezeichnet, mittels dessen die Außenwand 19 an der oberen Anschlußplatte befestigbar ist. Der Befestigungsring ist dabei als Passung auf der Außenwand 19 aufgebracht. Vorteilhafterweise, jedoch nicht dargestellt, ist es dabei, wenn sich die Außenwand 19 wulstartig über den Befestigungsring 22 etwas überschiebt. Es ist jedoch auch möglich, in dem Befestigungsring 22 Befestigungsmöglichkeiten vorzusehen. Beispielsweise ist es möglich, dort Aufrauhungen vorzunehmen, die ein formschlüssiges Verbinden bewirken. Selbstverständlich ist es auch möglich, die Außenwand 19 in den Befestigungsring 22 einzukleben bzw. einzuvulkanisieren.

In der oberen Anschlußplatte 2 ist die Öffnung 6 bezeichnet, welche Nuten 18 aufweist, in die Dichtungen 4 (hier nicht dargestellt) einlegbar bzw. einsetzbar sind. In der Fig. 5b ist der untere Bereich der pneumatischen Höhenverstelleinrichtung dargestellt, wobei mit dem Bezugszeichen 3 wieder die untere Anschlußplatte bezeichnet ist. In der unteren Anschlußplatte 3 ist eine Bohrung 10 für die Verbindungsschrauben mit dem Befestigungsring 22 vorgesehen. Die Öffnung 5 ist zur Aufnahme einer Führungsstange oder Kolbenstange beispielsweise im Durchmesser kleiner ausgeführt als die Öffnung 6 der Fig. 5a. Auch hier sind Nuten 18 eingearbeitet, in die Dichtungsringe beispielsweise einlegbar sind.

Der Anmelder behält es sich vor, für verschiedene Gegenstände dieser Anmeldung eigenständige Anmeldungen einzureichen, insbesondere die bestehende Anmeldung entsprechend zu teilen, um einen möglichst umfassenden Schutz für diese Erfindung zu erreichen.

Die jetzt mit der Anmeldung und später eingereichten Ansprüche sind Versuche zur Formulierung ohne Präjudiz für die Erzielung weitergehenden Schutzes.

Sollte sich hier bei näherer Prüfung, insbesondere auch des einschlägigen Standes der Technik, ergeben, daß das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

Merkmale, die nur in der Beschreibung offenbart wurden, oder auch Einzelmerkmale aus Ansprüchen, die eine Mehrzahl von Merkmalen umfassen, können jederzeit zur Abgrenzung vom Stande der Technik in den ersten Anspruch übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Pneumatische Höhenverstelleinrichtung für Kraftfahrzeuge, bestehend aus einem durch einen Luftanschluß (7) mit Druck beaufschlagbarem, bevorzugt zylinder- oder balgartigem Druckkörper (1) mit einer aus flexiblem Material gebildeten Außenwand (19), wobei sich der Druckkörper bei Druckbeaufschlagung längs einer bevorzugten Ausdehnungsrichtung auszudehnen vermag und der Druckkörper eine Stange, insbesondere eine Stange der Radführung oder des Schwingungsdämpfers, zumindest teilweise umgibt.

2. Pneumatische Höhenverstelleinrichtung nach Anspruch 1, **dadurch gekennzeichnet, daß** der Druckkörper in Ausdehnungsrichtung von Anschlußplatten (2, 3) verschließbar ist und die Anschlußplatten je mindestens eine koaxiale Öffnung aufweisen, durch welche die Stange und/oder zumindest Teile eines Schwingungsdämpfers führbar ist/sind.

3. Pneumatische Höhenverstelleinrichtung nach einem oder beiden der vorhergehenden Ansprüche, **dadurch gekennzeichnet, daß** der Druckkörper in Anschlagsrichtung von Anschlußplatten (2,3) verschließbar ist und die Anschlußplatten je mindestens eine koaxiale Öffnung aufweisen, durch welche die Stange eines Schwingungsdämpfers führbar ist und/oder die Anschlußplatten (2,3) druckdicht mit der Außenwand (19) verbindbar sind und die Öffnungen (5,6) gegen die Stange (8) abdichtbar ist.

4. Pneumatische Höhenverstelleinrichtung nach einem oder beiden der vorhergehenden Ansprüche, **dadurch gekennzeichnet, daß** der Druckkörper (1) bzw. seine Außenwand (19) aus homogenem Material, vorzugsweise einteilig, ausgebildet ist.

5. Pneumatische Höhenverstelleinrichtung nach einem oder mehreren der vorhergehenden Ansprüche **dadurch gekennzeichnet, daß** der Druckkörper (1) an seinem, in Ausdehnrichtung gesehenem Ende einen Befestigungsring (22) aufweist und der Druckkörperrand etwas über die Befestigungsringebene vorsteht und der Befestigungsring mit der Anschlußplatte (2,3) dicht verbindbar, insbesondere verschraubbar ist.

6. Pneumatische Höhenverstelleinrichtung nach einem oder mehreren der vorhergehenden Ansprüche, **dadurch gekennzeichnet, daß** zumindest die Außenwand (19) des Druckkörpers (1) einen Wulst aufweist, der über die Befestigungsringebene vorsteht und den Spalt zwischen Befestigungsring und Anschlußplatte abdichtet.

7. Pneumatische Höhenverstelleinrichtung nach einem oder mehreren der vorhergehenden Ansprüche, **dadurch gekennzeichnet, daß** in der Öffnung (5,6) der Anschlußplatten (2, 3) Dichtungen (4) vorgesehen sind und/oder die Stange (8) und/oder die Anschlußplatte (2,3) mit dem Schwingungsdämpfer (13) verbindbar ist und/oder die Stange (8) in einer der Anschlußplatten (2,3) fest dichtend, beispielsweise durch Schweißen, Kleben, Hartlöten oder dergleichen, eingefügt ist und/oder die Öffnungen (5,6) der beiden Anschlußplatten (2,3) gleichen oder unterschiedlichen Durchmesser besitzen.

8. Pneumatische Höhenverstelleinrichtung nach einem oder mehreren der vorhergehenden Ansprüche, **dadurch gekennzeichnet, daß** der Druckkörper (1) doppelwandig ausgebildet ist und eine Innenwand (11) und eine Außenwand (19) aufweist, welche insbesondere flexibel ausgebildet sind.

9. Pneumatische Höhenverstelleinrichtung nacht einem oder mehreren der vorhergehenden Ansprüche, **dadurch gekennzeichnet, daß** Innenwand (11) und die Außenwand (19) über eine Anschlußplatte (2, 3) geführt sind und ein Pressring (20) die beiden Wände (11, 19) auf den Anschlußplatten (2, 3) dicht hält oder die Innenwand (11) und die Außenwand (19) dicht mit der Anschlußplatte (2,3) verklebt, verbunden, verschraubt, vulkanisiert oder dergleichen ist und/oder die Außenwand (19) und Innenwand (11) miteinander verpreßt, verklebt oder vulkanisiert sind und so einen dichten Druckkörper (1) bilden.

10. Pneumatische Höhenverstelleinrichtung nach einem oder mehreren der vorhergehenden Ansprüche, **dadurch gekennzeichnet, daß** eine Führungshülse (12) im Inneren (B) des Druckkörpers (1) vorgesehen ist.

11. Pneumatische Höhenverstelleinrichtung nach einem oder mehreren der vorhergehenden Ansprüche, **dadurch gekennzeichnet, daß** die Anschlußplatte (2, 3) aus gleichem Material wie der Druckkörper (1), z.B. aus Gummi, EPDM oder Moosgummi oder aus Metall, insbesondere Leichtmetall wie Aluminium, besteht.

12. Pneumatische Höhenverstelleinrichtung nach einem oder mehreren der vorhergehenden Ansprüche, **dadurch gekennzeichnet, daß** der Luftanschluß (7) mit einer am Fahrzeug vorhandenen und/oder einer externen Druckerzeugungsanlage verbindbar ist und/oder der Luftanschluß (7) in der Außenwand (19) oder in der Anschlußplatte (2, 3) angeordnet ist.

13. Pneumatische Höhenverstelleinrichtung nach einem oder mehreren der vorhergehenden Ansprüche, **dadurch gekennzeichnet, daß** Einlaß- bzw. Auslaßventile, insbesondere druckbegrenzende Ventile, am Luftanschluß (7) vorgesehen sind und/oder die Luftanschlußöffnung'(7) in das Innere des durch die flexible Innenwand (11) und Außenwand (19) gebildeten Druckkörpers (1) weist.

14. Pneumatische Höhenverstelleinrichtung nach einem oder mehreren der vorhergehenden Ansprüche, **dadurch gekennzeichnet, daß** der Druckkörper (1) vorzugsweise in Ausdehnungsrichtung mittig mit einem Einschnitt (1/1) versehen ist und/oder der Druckkörper (1) als ringartiger Balg ausgebildet ist.

15. Pneumatische Höhenverstelleinrichtung nach einem oder mehreren der vorhergehenden Ansprüche, **dadurch gekennzeichnet, daß** zumindest die Außenwand (19) des Druckkörpers (1) aus Gummi, vorzugsweise faserverstärktem Gummi, flexiblem Kunststoffmaterial, verstärkter Leinwand bzw. dehnbahrem Verbundmaterial, gebildet ist.

16. Pneumatische Höhenverstelleinrichtung nach einem oder mehreren der vorhergehenden Ansprüche, **dadurch gekennzeichnet, daß** die Stange (8) in den Anschlußplatten (2, 3) außermittig gelagert ist.

17. Pneumatische Höhenverstelleinrichtung nach einem oder mehreren der vorhergehenden Ansprüche, **dadurch gekennzeichnet, daß** der Schwingungsdämfperkörper und/oder die Schwingungsdämpferstange in dem Druckkörper (1) angeordnet sind und/oder Schwingungdämpfer (13) und Druckkörper (1) als bauliche Einheit ausgebildet sind.

18. Pneumatische Höhenverstelleinrichtung nach einem oder mehreren der vorhergehenden Ansprüche, **dadurch gekennzeichnet, daß** das Gehäuse des Schwingungsdämpfers (13) ein Außengewinde (15) aufweist, welches in ein an der Anschlußplatte (5) vorgesehenes Innengewinde (21) einschraubbar ist, derart, daß eine Einstellung der Lage des Rades am Fahrzeug möglich ist.

19. Pneumatische Höhenverstelleinrichtung nach einem oder mehreren der vorhergehenden Ansprüche, **dadurch gekennzeichnet, daß** die Ausdehnungsrichtung parallel oder im wesentlichen parallel mit der Orientierung der Stangenachse, insbesondere der Dämpferstangenachse (A) ist.

20. Pneumatische Höhenverstelleinrichtung nach einem oder mehreren der vorhergehenden Ansprüche, **dadurch gekennzeichnet, daß** eine an der Radaufhängung und/oder der Radschwinge des Fahrzeugs befestigbare Grundplatte (23) vorgesehen ist, die mit der Anschlußplatte (2,3) verbindbar ist.

21. Pneumatische Höhenverstelleinrichtung nach einem oder mehreren der vorhergehenden Ansprüche, **dadurch gekennzeichnet, daß** an der zum Druckkörper (1) weisenden Seite der Anschlußplatte (2, 3) Dichtflächen (17) vorgesehen sind, die mit dem Druckkörper (1) bzw. dessen Außenwand (19) abdichtend zusammenwirken.

22. Pneumatische Höhenverstelleinrichtung nach einem oder mehreren der vorhergehenden Ansprüche, **dadurch gekennzeichnet, daß** die Anschlußplatten (2) im wesentlichen deckungsgleich ausgeführt sind und formschlüssig, dichtend mit der Außenwand 19 zusammenwirken und/oder je einen zum Inneren des Druckkörpers (B) gerichteten Führungsring (24) besitzen und/oder die flexible Außenwand (19) des Druckkörpers (1) in den oberen und unteren Anschlußplatten (2,3) formschlüssig und dichtend eingepaßt sind.

23. Pneumatische Höhenverstelleinrichtung nach einem oder mehreren der vorhergehenden Ansprüche, **dadurch gekennzeichnet, daß ein** Aufsatzzylinder (16) vorgesehen ist, der über den Schwingungsdämpfer (13) des Fahrzeugs schiebbar bzw. steckbar ist und/oder der Aufsatzzylinder (16) eine Verstelleinrichtung zur zusätzlichen Höhen- bzw. Niveauveränderung aufweist.

24. Pneumatische Höhenverstelleinrichtung nach einem oder mehreren der vorhergehenden Ansprüche, **dadurch gekennzeichnet, daß** die Verstelleinrichtung durch ein Innengewinde (21) im Aufsatzzylinder (16) und ein Außengewinde (15) auf dem Schwingungsdämpfer (13) gebildet ist.

25. Fahrzeug mit einer Radaufhängung, an welcher ein Schwingungsdämpfer angeordnet ist, sowie mit einer pneumatischen Höhenverstelleinrichtung nach einem oder mehreren der vorhergehenden Ansprüche, wobei zumindest eine Stange (8) des Schwingungsdämpfers (13) zumindest teilweise von dem Druckkörper (1) umgeben ist.
